(19) Europäisches Patentamt
European Patent Office
Office européen des brevets

(11) EP 3 126 550 B1

(12) **FASCICULE DE BREVET EUROPEEN**

(45) Date de publication et mention de la délivrance du brevet:
**29.11.2017 Bulletin 2017/48**

(21) Numéro de dépôt: **15725712.2**

(22) Date de dépôt: **01.04.2015**

(51) Int Cl.:
***D01D 1/02*** (2006.01) ***C04B 35/622*** (2006.01)
***D01D 5/06*** (2006.01) ***D01F 1/02*** (2006.01)
***D01F 6/14*** (2006.01) ***D01F 9/08*** (2006.01)
***D02J 13/00*** (2006.01)

(86) Numéro de dépôt international:
**PCT/FR2015/050843**

(87) Numéro de publication internationale:
**WO 2015/150701 (08.10.2015 Gazette 2015/40)**

(54) **PROCEDE DE PREPARATION DE FIBRES MACROSCOPIQUES DE TIO2 PAR EXTRUSION UNIDIRECTIONNELLE CONTINUE, FIBRES OBTENUES ET APPLICATIONS**

VERFAHREN ZUR HERSTELLUNG VON MAKROSKOPISCHEN FASERN VON TIO2 DURCH KONTINUIERLICHE UNIDIREKTIONALE EXTRUSION, HERGESTELLTE FASERN UND VERWENDUNGEN

METHOD FOR PREPARING MACROSCOPIC FIBRES OF TIO2 BY CONTINUOUS ONE-WAY EXTRUSION, FIBRES OBTAINED AND USES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.04.2014 FR 1452984**

(43) Date de publication de la demande:
**08.02.2017 Bulletin 2017/06**

(73) Titulaires:
- **Centre National de la Recherche Scientifique 75016 Paris (FR)**
- **Université de Bordeaux 33000 Bordeaux (FR)**
- **Université de Pau et des Pays de l'Adour 64012 Pau (FR)**

(72) Inventeurs:
- **BACKOV, Rénal 33200 Bordeaux-Cauderan (FR)**
- **POULIN, Philippe 33400 Talence (FR)**
- **NERI, Wilfrid 33230 Les Peintures (FR)**
- **KINADJIAN, Natacha 24220 Castels (FR)**
- **LACOMBE-LHOSTE, Sylvie 64000 Pau (FR)**
- **LE BECHEC, Mickael 64000 Pau (FR)**

(74) Mandataire: **Goulard, Sophie et al**
**Ipsilon**
**Le Centralis**
**63, avenue du Général Leclerc**
**92340 Bourg-la-Reine (FR)**

(56) Documents cités:
**FR-A1- 2 983 850 US-A- 4 222 977**

- **NATACHA KINADJIAN ET AL: "Photocatalytic TiO 2 Macroscopic Fibers Obtained Through Integrative Chemistry", EUROPEAN JOURNAL OF INORGANIC CHEMISTRY, vol. 2012, no. 32, 1 octobre 2012 (2012-10-01), pages 5350-5359, XP055153795, ISSN: 1434-1948, DOI: 10.1002/ejic.201200731 cité dans la demande**
- **REYES-CORONADO D ET AL: "Phase-pure TiO2 nanoparticles: anatase, brookite and rutile", NANOTECHNOLOGY, IOP, BRISTOL, GB, vol. 19, no. 14, 9 avril 2008 (2008-04-09) , page 145605, XP020136372, ISSN: 0957-4484**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 126 550 B1

- LIUXUE ET AL: "Low temperature deposition of TiO2 thin films on polyvinyl alcohol fibers with photocatalytical and antibacterial activities", APPLIED SURFACE SCIENCE, ELSEVIER, AMSTERDAM, NL, vol. 254, no. 6, 20 décembre 2007 (2007-12-20), pages 1771-1774, XP022396434, ISSN: 0169-4332, DOI: 10.1016/J.APSUSC.2007.07.145

## Description

La présente invention est relative à un procédé de fabrication de fibres macroscopiques de dioxyde de titane ($TiO_2$) par extrusion en continu en flux unidirectionnel, aux fibres macroscopiques de $TiO_2$ susceptibles d'être obtenues par un tel procédé, à l'utilisation de ces fibres en photocatalyse hétérogène pour la décontamination en polluants organiques de milieux gazeux ainsi qu'à un procédé de décontamination de milieux gazeux, notamment de l'air, mettant en oeuvre de telles fibres.

Depuis la découverte des propriétés photocatalytiques du dioxyde de titane en 1972 par Fujishima, de très nombreux travaux ont été consacrés à la mise au point de matériaux à base de $TiO_2$ et à l'étude de leurs propriétés photocatalytiques, pour des applications dans le domaine de l'environnement, de la chimie fine ou de l'énergie. Ces propriétés dépendent de celles du dioxyde de titane lui-même, modifié ou non, mais également de son interaction avec l'environnement.

La photocatalyse est un procédé chimique à multiples facettes dédié à la chimie verte, et plus généralement à l'environnement. L'étendue des interactions matière-lumière issue de la recherche académique et des développements industriels est vaste et devrait encore progresser puisque celles-ci sont mises à profit pour réaliser des synthèses photocatalysées, la dissociation de l'eau ou bien encore la dépollution photocatalytique de milieux aqueux ou gazeux. En particulier, les domaines de la photocatalyse en milieu hétérogène se sont beaucoup développés au cours des quatre dernières décennies, englobant des applications dans des domaines variés tels que la physique des semi-conducteurs, la science des surfaces, la science des matériaux et l'ingénierie chimique.

L'effet photocatalytique du $TiO_2$ à l'état solide se produit lorsqu'un exciton (la paire électron-trou générée par absorption d'un photon d'énergie égale ou supérieure au « *band gap* » ou saut énergétique du semi-conducteur) peut interagir avec les espèces adsorbées en surface. Les sauts énergétiques des principaux polymorphes de $TiO_2$ sont de 3,0 eV pour la forme rutile et de 3,2 eV pour la forme cristalline anatase, la plus active en photocatalyse. Ces sauts énergétiques sont tels que le $TiO_2$ est principalement activé par les UV A et qu'il n'absorbe qu'une faible fraction (5 %) du spectre solaire. Les mouvements des électrons et des trous dans le $TiO_2$, nanomatériau semi-conducteur, sont gouvernés par le confinement quantique et les propriétés de transport liées aux photons et aux phonons dépendent en grande partie de la taille et de la géométrie des matériaux. Hormis sa forme cristalline, les propriétés photocatalytiques du $TiO_2$ dépendent également de sa surface spécifique et de sa mésoporosité.

En dehors de ces considérations de cristallinité et de mésoporosité, le $TiO_2$ peut prendre des morphologies variées et se présenter par exemple sous forme de poudre, de monolithes, de nanofibres, ou bien encore de revêtements (films nanostructurés).

En effet, pour des applications environnementales telles que l'élimination de substances toxiques ou dangereuses dans l'eau ou dans l'air, l'une des difficultés concerne l'utilisation du matériau sous forme de poudre : afin d'éviter la propagation de nanoparticules dans l'effluent aqueux ou gazeux à traiter ou pour éliminer une étape fastidieuse de nano-filtration, de nombreux travaux ont été consacrés au dépôt de nanomatériaux sur différents supports (papier, verre, acier, textiles, polymères, membranes, céramiques, billes creuses......). Il a en particulier déjà été proposé d'adsorber des nanoparticules de $TiO_2$ sur un matériau fibreux à base d'une résine fluorée comme décrit par exemple dans la demande de brevet EP 0 950 731, ou dans un matériau céramique tel que décrit par exemple dans la demande EP 1 614 763.

Il a également déjà été proposé d'utiliser du $TiO_2$ sous la forme de nanotubes ou de nanofibres dans lesquels le rapport surface/volume élevé, les propriétés d'adsorption de différents réactifs et leur morphologie spécifique induisant un temps de contact prolongé avec les polluants aient un effet positif sur les propriétés photocatalytiques de ces matériaux. C'est ainsi qu'il a par exemple été proposé, notamment par Caruso, R. A. et al. ("Titanium Dioxide Tubes from Sol-Gel Coating of Electrospun Polymer Fibers", Adv. Mater., 2001, 13, 1577-1579) un procédé de préparation de nanotubes de $TiO_2$ par électrofilature qui est un procédé utilisant l'énergie électrique pour transformer une solution à base de polymère et de particules en fibres d'un diamètre nanométrique qui sont ensuite calcinées pour conduire aux nanotubes de $TiO_2$. Bien qu'offrant un certains nombre d'avantages tels que la simplicité, la contrôlabilité, un faible coût de production et une mise en oeuvre pouvant être transposée à l'échelle industrielle, la production de nanofibres de $TiO_2$ par ce procédé ne donne cependant pas entière satisfaction en raison d'inconvénients inhérents à la technique d'électrofilature. En effet, les fibres natives se retrouvent dispersées de façon aléatoire dans la solution pendant leur synthèse, ce qui ne permet pas d'obtenir des fibres présentant un arrangement unidirectionnel à l'échelle macroscopique, les fibres à l'état final ne pouvant notamment pas être autosupportées et présentant des défauts de cohésion macroscopiques dus au frittage imposé lors du traitement thermique de l'étape de calcination. De plus, un tel procédé n'est pas suffisamment reproductible d'une synthèse à une autre, les fibres ainsi obtenues ne présentant pas des propriétés photocatalytiques normalisées dans la mesure où leur rugosité de surface et leur épaisseur sont difficilement contrôlables.

Il a déjà également été proposé, notamment dans l'article de Kinadjian N. et al. (Eur. J. Inorg. Chem., 2012, 5350-5359) de préparer des fibres macroscopiques de $TiO_2$ selon un procédé de co-extrusion en rotation d'un sol préparé par chauffage d'une suspension aqueuse de nanoparticules de $TiO_2$ sous la forme de bâtons ou de sphères et

de particules d'alcool polyvinylique dans un bécher en rotation à 25 tours par minutes (tpm) contenant une solution saturée de $Na_2SO_4$ à 45°C, au moyen d'une seringue d'injection de 300 $\mu$m de diamètre, avec une vitesse d'injection de 40 $mL.h^{-1}$. La mise en contact du sol avec la solution de $Na_2SO_4$ provoque la solidification du polymère d'alcool polyvinylique et la formation des fibres. Après récupération dans le bécher, les fibres sont ensuite calcinées pour éliminer le polymère d'alcool polyvinylique. Ce procédé présente néanmoins plusieurs inconvénients, notamment il conduit à des fibres de $TiO_2$ dont la longueur de peut dépasser quelques centimètres et il n'est pas transposable à l'échelle industrielle. De plus ce procédé de peut pas être réalisé en continu dans la mesure où il est indispensable de l'interrompre régulièrement de façon à retirer les fibres du bécher afin d'éviter que celles-ci ne finissent par s'emmêler ou former une pelote. De plus, même après lavage des fibres avec de l'eau distillée, ce procédé ne permet pas d'éliminer complètement le sel utilisé pour provoquer la solidification du polymère d'alcool polyvinylique ($Na_2SO_4$). D'autre part, les diamètres des fils extrudés par cette technique ne peuvent pas être trop petits pour des raisons de tenues mécaniques lorsqu'ils sont sortis du bain. Enfin, le temps est à considérer car cette technique permet au plus de faire 100 mètres de fils par jour, ce qui ne permet pas une extension à l'échelle industrielle.

Le but de l'invention est de proposer un procédé de fabrication qui soit aisément transposable à l'échelle industrielle, et qui permette de produire, de façon reproductible et normalisée d'un point de vue de leur topologie de surface, des fibres macroscopiques beaucoup plus longues que celles obtenues en mettant en oeuvre les procédés d'extrusion en rotation, tout en étant sensiblement aussi performantes d'un point de vue photocatalytique que les fibres de silice modifiées par du $TiO_2$ disponibles actuellement sous la dénomination commerciale Quartzel® PCO auprès de la société Saint Gobain.

Ce but est atteint par le procédé de préparation de fibres macroscopiques de $TiO_2$ qui fait le premier objet de l'invention et qui va être décrit ci-après.

La présente invention a pour premier objet un procédé de préparation d'une fibre macroscopique de dioxyde de titane en continu comprenant les étapes suivantes :

i) la préparation d'une dispersion de nanoparticules de dioxyde de titane dans une solution d'au moins un polymère d'alcool vinylique solubilisé dans un solvant,

ii) l'extrusion continue et unidirectionnelle de la dispersion obtenue ci-dessus à l'étape précédente dans un bain de coagulation apte à provoquer la solidification dudit polymère, ladite extrusion étant réalisée au moyen d'une ou d'un ensemble d'aiguilles cylindriques d'injection ayant un diamètre compris entre 250 et 350 $\mu$m, pour former une pré-fibre en un matériau composite comprenant les nanoparticules de dioxyde de titane et le polymère d'alcool vinylique solidifié,

iii) l'extraction continue de la pré-fibre formée ci-dessus à l'étape ii) en dehors du bain de coagulation, ladite extraction étant réalisée co-axialement par rapport à l'axe d'extrusion de la dispersion dans ledit bain de coagulation,

iv) le lavage en continu de la pré-fibre extraite du bain de coagulation,

v) le séchage en continu de la pré-fibre de l'étape précédente pour obtenir une fibre de matériau composite sec,

vi) l'élimination du polymère d'alcool vinylique par calcination de la pré-fibre de matériau composite sec de l'étape précédente, pour obtenir une fibre macroscopique de dioxyde de titane.

Grâce à ce procédé, il est maintenant possible de produire de façon semi-industrielle, reproductible et normalisée des fibres macroscopiques de dioxyde titane dont la longueur peut aller jusqu'à plusieurs centaines de mètres, lesdites fibres ayant des propriétés catalytiques améliorées par rapport aux fibres de dioxyde de titane obtenues par les procédés de l'art antérieur, et en particulier par rapport aux fibres de dioxyde de titane obtenues par un procédé d'extrusion en rotation tel que décrit par exemple dans l'article de Kinadjian N. *et al.* (pré-cité), lesdites propriétés photocatalytiques étant de l'ordre de grandeur de celles des fibres commerciales actuellement disponibles sur le marché telles que les fibres Quartzel® PCO de Saint Gobain.

Au sens de la présente invention, on entend par fibre macroscopique de dioxyde de titane, un brin ayant deux dimensions moyennes orthogonales à son axe longitudinal, la première dimension moyenne (correspondant à sa largeur) variant de 30 à 60 $\mu$m environ, préférentiellement de 40 à 50 $\mu$m environ et la deuxième dimension moyenne (correspondant à son épaisseur) variant de 10 à 40 $\mu$m environ, préférentiellement de 10 à 20 $\mu$m environ .

Les nanoparticules de dioxyde de titane utilisées lors de l'étape i) du procédé conforme à l'invention sont de préférence des nanoparticules sphériques dont le diamètre moyen varie de 2 à 15 nm, et encore plus particulièrement de 3 à 8 nm.

De telles nanoparticules peuvent notamment être préparées par précipitation d'une solution d'alcoxyde de

titane tel que le tetra-isopropoxyde de titane, en milieu alcalin, en présence ou non d'un tensioactif tel que par exemple un tensioactif non ionique, selon le procédé précédemment décrit par Kinadjian N. *et al.* (pré-cité).

La quantité de nanoparticules de dioxyde de titane au sein de la dispersion préparée à l'étape 1) varie de préférence de 3 à 7 % en masse et encore plus préférentiellement de 4 à 5 % en masse par rapport à la masse totale de la dispersion.

Le polymère d'alcool vinylique utilisé lors de l'étape i) du procédé conforme à l'invention peut être un homo- ou un copolymère d'alcool vinylique. Sa masse moléculaire varie de préférence de 5000 à 300000 $g.mol^{-1}$, et encore plus préférentiellement de 150000 à 250000 $g.mol^{-1}$. Il présente de préférence un degré d'hydrolyse supérieur à 95 %, et encore plus préférentiellement supérieur ou égal à 99%.

La quantité de polymère d'alcool vinylique au sein de la dispersion préparée à l'étape 1) varie de préférence de 2 à 11 % en masse et encore plus préférentiellement de 4 à 10 % en masse par rapport à la masse totale de la dispersion.

Le solvant utilisé lors de la préparation de la dispersion à l'étape 1) du procédé est de préférence choisi parmi l'eau, l'éthanol, l'isopropanol et leurs mélanges. Parmi de tels solvants, l'eau est tout particulièrement préférée.

Selon une forme de réalisation particulière du procédé conforme à l'invention, l'étape i) comprend les sous-étapes suivantes :

i1) la préparation d'une dispersion aqueuse de nanoparticules de dioxyde de titane,

i2) la préparation d'une dispersion aqueuse de particules solides d'un polymère d'alcool vinylique,

i3) le mélange des dispersions obtenues ci-dessus aux étapes i1) et i2), pour obtenir une dispersion de nanoparticules de dioxyde de titane dans une solution de polymère d'alcool vinylique.

Selon cette forme de réalisation, la sous-étape i3) est de préférence réalisée à une température variant de 50 à 60°C, de façon à favoriser la dissolution du polymère d'alcool vinylique dans l'eau.

Par ailleurs, la dispersion de nanoparticules de dioxyde de titane préparée à l'étape i) du procédé conforme à l'invention peut en outre renfermer des particules sphériques d'un matériau polymère (latex). L'ajout de ces particules dans la dispersion permet de créer une porosité supplémentaire dans la structure finale des fibres macroscopiques de dioxyde de titane dans la mesure où ces particules sont éliminées, au même titre que le polymère d'alcool vinylique, lors de la calcination de la pré-fibre de matériau composite sec de l'étape vi).

Les particules utilisables dans la dispersion de l'étape i), sont de préférence de taille nanométrique, en particulier leur diamètre varie de 100 à 300 nm. Elles peuvent par exemple être choisies parmi des nanoparticules de polystyrène, de polyméthacrylate, de polyméthacrylate d'éthyle, de polybutadiène, ou bien encore de poly-styrène-divinylbenzène.

Lorsqu'elles sont utilisées, les particules sphériques de matériau polymère représentent de préférence de 0,3 à 3 % en masse par rapport à la masse totale de la dispersion.

Bien entendu, l'introduction des particules sphériques de matériau polymère dans la dispersion devra être réalisée à une température inférieure à la température de fusion du polymère les constituant de façon à éviter leur mélange avec les autres constituants de la dispersion et conserver leur forme sphérique dans le but de créer la porosité attendue dans les fibres macroscopiques finalement obtenues à l'issue de la calcination de l'étape vi). Ainsi, en pratique, les particules sphériques de matériau polymère sont introduites dans la dispersion après refroidissement de la dispersion à une température d'environ 50°C.

L'étape ii) d'extrusion continue et unidirectionnelle du procédé conforme à l'invention consiste à injecter, en continu la dispersion de l'étape i) dans un bain de coagulation de façon à provoquer la solidification quasi immédiate du polymère d'alcool vinylique et former une pré-fibre de matériau composite comprenant les nanoparticules de dioxyde de titane et le polymère d'alcool vinylique solidifié, ladite pré-fibre se présentant sous la forme d'un mono-filament si une seule aiguille d'injection à été utilisée, ou d'un ensemble de mono-filaments si un ensemble d'aiguilles à été utilisé.

Selon l'invention, le bain de coagulation est de préférence une solution d'un ou plusieurs sels en solution dans un solvant.

Le solvant du bain de coagulation peut être choisi parmi l'eau, les alcools en $C_{1-4}$ tels que par exemple le méthanol et l'éthanol, un polyol, et leurs mélanges. Parmi ces solvants, l'eau est particulièrement préférée.

Le ou les sels présents dans le bain de coagulation ont pour fonction d'induire et/ou de faciliter la solidification du polymère d'alcool vinylique. Ils sont de préférence choisis parmi le sulfate de sodium, le sulfate d'ammonium, le sulfate de potassium, le carbonate de sodium, l'hydroxyde de sodium, l'hydroxyde de potassium et leurs mélanges. Selon une forme de réalisation particulièrement préférée de l'invention, le bain de coagulation est une solution aqueuse saturée de sulfate de sodium.

La température du bain de coagulation peut varier de 30 à 55°C environ, et de préférence de 35 à 50°C environ.

L'extrusion de la dispersion lors de l'étape ii) est de préférence réalisée par injection d'une quantité de dispersion variant de 4 à 9 mL/h et encore plus préférentiellement de 5 à 7 mL/h. Ainsi qu'indiqué précédemment, le diamètre de

la ou des aiguilles d'injection varie entre 250 et 350 μm, et encore plus préférentiellement est de 300 μm. Compte tenu de la quantité de dispersion injectée et du diamètre des aiguilles, on peut en déduire que la vitesse d'injection de la dispersion dans le bain de coagulation varie de 1 à 1,9 m/min, et encore plus préférentiellement de 1,3 à 1,5 m/min. Une vitesse d'injection de 1,3 m/min est tout particulièrement adaptée selon l'invention.

La solidification du polymère d'alcool vinylique au sein du bain de coagulation est très rapide et intervient pratiquement immédiatement après l'injection de la dispersion. Cependant, afin de renforcer la solidité des pré-fibres obtenues lors de l'étape ii), il est préférable que le temps de contact de la dispersion avec le bain de coagulation soit d'au moins 30 secondes. Ainsi, selon une forme de réalisation préférée de l'invention, le temps de contact de la dispersion dans le bain de coagulation lors de l'étape ii) varie de 30 secondes à 2 minutes environ.

L'extraction de la pré-fibre en dehors du bain de coagulation lors de l'étape iii) est également réalisée en continu. Il est particulièrement important que cette extraction soit réalisée co-axialement par rapport à l'axe d'extrusion de la dispersion dans le bain de coagulation, c'est-à-dire en conservant le même axe que l'axe d'injection de la dispersion dans le bain de coagulation de façon à obtenir des fibres macroscopiques de dioxyde de titane de grande longueur et présentant, à l'issue de l'étape finale de calcination, une topologie de surface dite « en tronc d'arbre », c'est-à-dire comportant des striations de surface longitudinales dont l'axe principal est lui-même parallèle aux axes d'extrusion et d'extraction. Les striations observées en surface sont en fait obtenues lors du procédé d'extrusion de la dispersion de l'étape i) dans le bain de coagulation, au cours de laquelle les chaînes du polymère d'alcool vinylique sont alignées aux grandes échelles par le cisaillement imposé.

L'étape iv) de lavage des fibres est de préférence réalisée en faisant circuler les pré-fibres issues de l'étape iii) précédente dans un bain de lavage comprenant préférentiellement de l'eau.

Le bain de lavage peut comprendre en outre un ou plusieurs additifs destinés à limiter la solubilisation du polymère d'alcool dans l'eau et l'étirement excessif des pré-fibres de matériau composite. Parmi de tels additifs on peut notamment mentionner le tetraborate de sodium, par exemple à une concentration de 0,1 $mol.l^{-1}$ environ.

La durée de l'étape iv) de lavage, c'est-à-dire la durée de mise en contact des pré-fibres de matériau composite avec le bain de lavage est d'au moins 1 minute, cette durée variant préférentiellement de 1 à 3 minutes environ.

L'étape de séchage des pré-fibres de matériau composite lors de l'étape v) peut par exemple être réalisée par exposition desdites pré-fibres à une température variant de 65 à 90°C, et encore plus préférentiellement de 75 à 85°C. La durée de l'étape de séchage peut varier de 1 à 3 minutes environ en fonction de la température de séchage utilisée.

Selon une forme de réalisation préférée de l'invention, l'étape de séchage est réalisée par passage continu des pré-fibres entre des lampes émettant un rayonnement infrarouge ou bien par passage dans l'enceinte d'un four à gaz circulant.

Selon une forme de réalisation particulière et préférée de l'invention, le procédé comprend deux cycles de lavage et de séchage, c'est-à-dire qu'après une première étape v) de séchage, les pré-fibres issues de l'étape v) subissent à nouveau l'enchainement des étapes iv) de lavage puis v) de séchage telles que décrites précédemment.

Selon une forme de réalisation particulière de l'invention, le procédé peut en outre comprendre, entre l'étape v) de séchage et l'étape vi), une étape de mise en forme des pré-fibres par exemple par filage, tréfilage, cordage ou tissage, etc..., afin d'obtenir un assemblage de pré-fibres mises en forme, c'est-à-dire filées, tréfilées, cordées ou tissées. C'est ensuite cet assemblage de pré-fibres mises en forme qui est soumis à l'étape vi) du procédé conforme à l'invention. Selon cette forme de réalisation particulière du procédé, il est ainsi possible d'accéder, après la calcination effectuée à l'étape vi), à des textiles dits « techniques » (propriétés germicides, de dépollution et de dégradation en général d'espèces organiques).

L'étape vi) est réalisée par calcination des pré-fibres de matériau composite sec issues de l'étape v) et a pour but d'éliminer le polymère d'alcool vinylique et de provoquer la cristallisation du dioxyde de titane sous forme anatase. L'étape vi) est de préférence réalisée à une température variant de 350 à 500°C environ.

La température de calcination limitée à 500°C, et de préférence de l'ordre de 450°C, permet d'obtenir des fibres macroscopiques dans lesquelles le dioxyde de titane est sous forme anatase, la calcination à une température supérieure à 500°C conduirait à la transformation de la phase anatase en phase rutile.

La durée de l'étape vi) varie généralement de 30 minutes à 7 heures environ.

A la fin de l'étape vi), les fibres macroscopiques de dioxyde de titane ainsi obtenues sont prêtes à être utilisées, notamment à titre de photocatalyseur.

Le procédé conforme à l'invention peut en outre comprendre une étape de bobinage et d'étirage à chaud des pré-fibres de matériau composite, ladite étape d'étirage étant réalisée entre l'étape de séchage et l'étape de bobinage.

Ainsi, selon une forme de réalisation particulièrement avantageuse de l'invention, le procédé de préparation est mis en oeuvre sur une ligne de fabrication comprenant, en alignement unidirectionnel et dans cet ordre, un poste d'injection de la dispersion de nanoparticules dans un bain de coagulation, un poste de lavage, un poste de séchage et un poste de bobinage comprenant une bobine reliée à un moyen permettant de faire tourner la bobine à vitesse constante, tel que par exemple un moteur, un ou plusieurs rouleaux intermédiaires pouvant être placés entre le poste de lavage et le poste de séchage afin de supporter et entrainer les fibres jusqu'au poste de bobinage, et un poste de

calcination.

Il suffit alors de fixer la pré-fibre sur la bobine en sortie du poste de séchage, puis de mettre en mouvement la bobine à une vitesse de rotation compatible avec et adaptée à la vitesse d'injection de la dispersion préparée à l'étape i) dans le bain de coagulation, ainsi qu'aux vitesses du ou des rouleaux intermédiaires placés entre les postes de lavage et de séchage, de façon à entrainer et à embobiner les fibres composites en continu.

Selon cette forme de réalisation, la vitesse de rotation de bobine est supérieure à la vitesse calculée d'injection de la dispersion de nanoparticules dans le bain de coagulation, de façon à provoquer un étirement des pré-fibres de matériau composite en sortie du poste de séchage et une réduction de leur diamètre. Ainsi selon cette forme de réalisation, la vitesse de rotation de la bobine varie de 2 à 4 $m.min^{-1}$ environ.

Selon une forme de réalisation préférée de cette variante, le facteur d'étirement, c'est-à-dire le rapport entre le diamètre de la pré-fibre avant étirement et le diamètre de la pré-fibre après étirement varie de 2 à 2,5 environ. L'étirement permet également d'exalter les striations de surface longitudinales qui caractérisent les fibres conformes à l'invention.

La présente invention a également pour deuxième objet la fibre macroscopique de dioxyde de titane susceptible d'être obtenue par la mise en oeuvre du procédé tel que défini dans le premier objet de l'invention.

Elle est caractérisée en ce qu'elle est constituée de 85 à 90 % de dioxyde de titane sous forme cristalline anatase et de 10 à 15 % de brookite, et en ce qu'elle présente :

- deux dimensions moyennes orthogonales à leur axe longitudinal, la première dimension moyenne (correspondant à leur largeur) variant de 30 à 60 $\mu$m environ, préférentiellement de 40 à 50 $\mu$m environ et la deuxième dimension moyenne (correspondant à leur épaisseur) variant de 10 à 40 $\mu$m environ, préférentiellement de 10 à 20 $\mu$m environ ;
- une topologie macroscopique de surface composée d'une pluralité de striations ayant un axe longitudinal parallèle à l'axe principal desdites fibres ; et
- une structure comportant des micropores et des mésopores et dont les dimensions moyennes, en ce qui concerne les mésopores, varient de 2 à 40 nm environ.

En outre, ladite fibre macroscopique de dioxyde de titane présente une surface spécifique pouvant varier de 100 à 150 $cm^2/g$, et encore plus préférentiellement de 110 à 140 $cm^2/g$.

Lesdites fibres ont de bonnes propriétés mécaniques malgré le fait qu'elles présentent des dimensions orthogonales inférieures à celles des fibres précédemment obtenues en mettant en oeuvre le procédé de préparation par extrusion en rotation tel que décrit par exemple dans l'article de Kinadjian N. *et al.* (pré-cité).

La présente invention a également pour objet l'utilisation des fibres macroscopiques de dioxyde de titane obtenues par la mise en oeuvre du procédé tel que défini dans le premier objet de l'invention ou telles que définies dans le deuxième objet de l'invention, à titre de photocatalyseur, notamment pour catalyser la dégradation de composés organiques volatiles (VOCs) en milieu gazeux sous l'influence d'une irradiation UV.

Cette utilisation peut par exemple trouver une application pour la dépollution et la purification de l'air.

Pour cette utilisation, les fibres conformes à l'invention peuvent être utilisées sous forme de fils continus constitués d'un assemblage de fibres.

Parmi les composés organiques volatiles dégradables par le photocatalyseur de l'invention, on peut en particulier mentionner l'acétone, les alcanes légers, les composés aromatiques (benzène, toluène, xylène,..), les alcools, les aldéhydes,...etc

La présente invention a donc pour quatrième objet un procédé de décontamination d'un milieu gazeux susceptible de contenir un ou plusieurs composés organiques volatils mettant en oeuvre lesdites fibres macroscopiques de dioxyde de titane. Ce procédé est caractérisé en ce que la décontamination est réalisée par mise en contact dudit milieu gazeux avec lesdites fibres macroscopiques de dioxyde titane sous irradiation lumineuse à une longueur d'onde centrée vers 365 nm (radiation UV).

Selon ce procédé, la photocatalyse des VOCs est réalisée en surface desdites fibres avec un bon rendement photocatalytique. Par ailleurs, la dégradation des VOCs est observée instantanément après l'irradiation UV, sans phase de latence, et est stable dans le temps.

Selon une forme de réalisation particulière de l'invention, le passage du milieu gazeux sur lesdites fibres est réalisé en flux continu.

La présente invention est illustrée par les exemples de réalisation suivants, auxquels elle n'est cependant pas limitée.

## EXEMPLES

Les matières premières utilisées dans les exemples qui suivent sont listées ci-après :

- Tétra-isopropoxyde de titane à 98 % % ($Ti(Oipr)_4$) : société Aldrich,
- Acide chlorhydrique à 37 %, société Aldrich,
- Nonylphénol oxyéthyléné à 10 moles d'oxyde d'éthylène (tensioactif nonionique), vendu sous la dénomination commerciale Tergitol ® NP-10 par la société Aldrich ;
- Ammoniaque ($NH_4OH$) ; sulfate de sodium ($Na_2SO_4$), société Aldrich,
- Alcool polyvinylique (PVA) hydrolysé, de masse molaire 195000, pur à 99 %, société Fluka.

Les autres produits chimiques et solvants utilisés dans les exemples étaient tous de grade analytiques ou de grade HPLC.

Ces matières premières ont été utilisées telles que reçues des fabricants, sans purification supplémentaire.

Caractérisations :

Les fibres macroscopiques de $TiO_2$ préparées dans les exemples qui suivent ont été caractérisées par différentes méthodes d'analyses pour mettre en évidence leur caractère mésoporeux, et leurs microstructures (cristallinités) :

Des observations en microscopie électronique à balayage (MEB) ont été réalisées à l'aide d'un microscope électronique à balayage vendu sous la référence 6700F par la société JEOL, fonctionnant à 10 kV ou à 5kV.

Des mesures de surface spécifique et des caractérisations à l'échelle mésoscopique ont été faites par des techniques d'adsorption-désorption d'azote à l'aide d'un appareil commercialisé sous la dénomination Micromeritics ASAP 2010 après dégazage des fibres de $TiO_2$ à 150°C sous vide pendant 12 heures. La rugosité des fibres de $TiO_2$ a été évaluée par détermination de la dimension de surface fractale (Ds), qui peut être déduite à partir des courbes des isothermes d'adsorption à l'azote. Ds a été calculé selon la procédure décrite par Avnir, D. et Jaroniec, M. (« An Isotherm Equation for Adsorption on Fractal Surfaces of Heterogeneous Porous Materials. », Langmuir, 1989, 5, 1431-1433). Les données expérimentales de l'isotherme d'adsorption sont reportées sur un graphique en utilisant l'équation (1) suivante :

$$\theta = K\ [\log(P_0/P]^{-v} \qquad (1)$$

dans laquelle :

- v = 3-Ds,
- $\theta$ est l'adsorption relative calculée à partir de la courbe normalisée avec la plus forte valeur d'adsorption,
- K est une constante, qui représente l'ordonnée à l'origine de la fonction Log $\theta$ = f(Log[log($P_0$/P]$^{-v}$) ; K = 0,166,
- $P_0$ est la pression atmosphérique (1 bar),
- P est la pression à un instant "t" ; elle est inférieure à la pression atmosphérique,
- Ds est la dimension de la surface fractale que l'on cherche à déterminer.

Ds peut ensuite facilement être obtenue en convertissant l'équation (1) selon l'équation (2) suivante :

$$\mathrm{Log}(\theta) = \log(K) - v \log(\log[P_0/P]) \qquad (2)$$

Ds est déduite à partir de la pente de la courbe et peut varier entre 2 (surface non rugueuse) et 3. Ainsi, toute valeur de Ds supérieure à 2 dénote une augmentation de la rugosité de surface. La plage d'adsorption à utiliser pour cette analyse doit être comprise dans la gamme rapport des pressions partielles $P_0$/P allant de 0,05 à 0,3 (Avnir, D. et Jaroniec, M., précité).

La structure cristalline du $TiO_2$ a été caractérisée par diffraction de rayons X aux grands angles *via* un diffractomètre vendu sous la dénomination commerciale PANalytical X'pert MPD en montage Bragg-Brentano $\theta$-$\theta$, équipé d'un monochromateur graphite et d'une chambre Anton-Paar HTK16 (irradiation à la raie K$\alpha$1 du Cu $\lambda$Cu égale à 1,5418 Å

(40 KV, 50 mA)).

**EXEMPLE 1 : Préparation et caractérisation de fibres macroscopiques de $TiO_2$ selon le procédé conforme à l'invention**

Dans cet exemple on a préparé des fibres macroscopiques de $TiO_2$ selon le procédé d'extrusion unidirectionnelle en continu faisant l'objet de l'invention.

1.1. Synthèse des nanoparticules de $TiO_2$

5 mL d'une solution d'HCl à 37% en volume (soit 12 M) ont été ajouté à 50 mL d'une solution aqueuse de Tergitol ® NP-10 à 15 % en masse. Le pH de la solution résultante a ensuite été ajusté à 1,8 par ajout de $NH_4OH$. 6,4 mL de $Ti(Oipr)_4$ ont ensuite été ajouté lentement à ladite solution sous agitation, et le mélange résultant a été laissé a température ambiante. Au bout de 12 heures environ, un précipité blanc de nanoparticules de $TiO_2$ s'était formé et a été récupéré par évaporation de la phase liquide du mélange. La poudre de nanoparticules $TiO_2$ ainsi récupérée a été lavée plusieurs fois à l'eau désionisée de façon à éliminer toute trace du tensioactif nonionique.

1.2. Formulation des dispersions

Une dispersion aqueuse à 8 % en masse a été préparée en utilisant les nanoparticules de $TiO_2$ préparées ci-dessus à l'étape 1.1..

10 g de cette dispersion aqueuse ont été mélangés avec 10 g d'une dispersion aqueuse de PVA à 12 % en masse à une température de 80°C afin de faire fondre le PVA et d'obtenir une solution de PVA renfermant les nanoparticules de $TiO_2$.

1.3. Génération des fibres macroscopiques de $TiO_2$

Une photographie des différentes parties du dispositif utilisé pour réaliser l'extrusion unidirectionnelle en continu des fibres macroscopiques de $TiO_2$ est donnée par la figure 1 annexée. Le dispositif est composé :

- d'une pompe à seringue (figure 1a) sur laquelle est fixée une seringue comportant une aiguille de 300 $\mu$m de diamètre, remplie de la solution de nanoparticules de $TiO_2$ préparée ci-dessus à l'étape 1.2. ;
- d'un bain de coagulation rempli d'une solution aqueuse saturée de $Na_2SO_4$, (soit environ 320 $g.L^{-1}$ de $Na_2SO_4$) maintenue à 40° C (figure 1b, 1c) ;
- d'un bain de lavage rempli d'une solution aqueuse de tetraborate de sodium à 0,1 $mol.L^{-1}$ (figure 1d) ;
- d'un élément de séchage comprenant deux lampes à infrarouge se faisant face et disposées de chaque côté d'un tapis roulant comportant un revêtement en Teflon® (figure 1e),
- d'un enrouleur tournant permettant d'embobiner de manière continue les fibres en sortie de l'élément de séchage (figure 1f).

La pompe à seringue à été utilisée pour injecter la solution de nanoparticules de $TiO_2$ dans le bain de coagulation à raison de 6 mL/h, correspondant à une vitesse linéaire d'injection calculée de 1,4 m/min. la solution de nanoparticules de $TiO_2$ a coagulé immédiatement en sortie de seringue, dès son injection dans le bain de coagulation, sous forme d'un filament continu d'un matériau composite formé de nanoparticules de $TiO_2$ emprisonnées dans une matrice de PVA solide ($TiO_2$-PVA). Le temps de contact minimum des filaments de $TiO_2$-PVA avec la solution de $Na_2SO_4$ dans le bain de coagulation a été fixé à 30 secondes afin de renforcer leur stabilité mécanique.

Les fibres ont ensuite traversé le bain de lavage afin d'éliminer les résidus de $Na_2SO_4$ pouvant être présents dans les fibres après la coagulation. Dans la mesure où le PVA est soluble dans l'eau, le bain de lavage a été additionné de tetraborate de sodium dont la présence permet d'empêcher les fibres de s'altérer et se rompre pendant l'étape de lavage. La durée de contact des fibres de $TiO_2$-PVA avec le bain de lavage a été fixée à une minute environ.

En sortie du bain de lavage, les fibres de $TiO_2$-PVA ont été entrainées par le tapis roulant et séchées à une température de 75°C environ par passage entre les lampes à infrarouges situées de part et d'autre du tapis roulant.

A la fin de la zone de séchage, les fibres ont été tendues et relevées du tapis roulant et embobinées à l'aide de l'enrouleur rotatif réglé à une dont la vitesse de rotation minimum de 3,2 $m.min^{-1}$. Dans la mesure où la vitesse

d'injection en sortie de seringue était de 1,4 m.min$^{-1}$, on peut en déduire que le facteur d'étirement minimum correspondant durant l'ensemble du procédé de fabrication des fibres macroscopiques de $TiO_2$ était de 2,3.

Selon ce procédé il a été possible de produire en continu plusieurs centaines de mètres de fibres d'un matériau composite $TiO_2$-PVA.

Un second lavage des fibres de $TiO_2$-PVA a ensuite été réalisé par débobinage des fibres et passage de celles-ci dans un bain d'eau, suivi d'un second séchage dans les mêmes conditions que précédemment, avant que celles-ci ne soient à nouveau embobinées sur l'enrouleur rotatif. Cette deuxième session de lavage/séchage/embobinage des fibres avait pour but d'éliminer tout résidu de $Na_2SO_4$ et de tetraborate de sodium dans le matériau composite $TiO_2$-PVA.

Finalement, les fibres de $TiO_2$-PVA ont ensuite été calcinées pendant 6 heures à 450°C, en appliquant une vitesse de montée en température de 5°C/min pour éliminer le PVA et induire la cristallisation du $TiO_2$ sous forme anatase. On a ainsi obtenu des fibres macroscopiques de $TiO_2$ qui ont ensuite été caractérisées.

1.4. Caractérisations des fibres macroscopiques de $TiO_2$

Les résultats de microscopie électronique des fibres après calcination sont donnés par la figure 2 annexée à différents grossissements (figure 2a : x 3000 ; 2b : x 25000 et 2c : x 2000).

De façon générale, les fibres présentent une forme aplatie, avec une largeur allant de 30 à 60 μm et plus particulièrement de 40 à 47 μm et une épaisseur allant de 10 à 40 μm.

Leur topologie à l'échelle macroscopique est clairement différente de celles obtenues par extrusion en rotation selon le procédé précédemment décrit par Kinadjian N. *et al.* (précité). En effet, alors que les fibres obtenues par extrusion en rotation présentaient une topologie de surface composée d'une rugosité alvéolaire de surface (juxtaposition de pores), les fibres de $TiO_2$ obtenues par extrusion co-axiale selon le procédé conforme à l'invention présentent une topologie en « tronc d'arbre », les fibres présentant une pluralité de striations longitudinales de surface, larges et profondes, orientées de façon parallèle à l'axe principal des fibres. Dans la mesure où les fibres sont étirées, ces striations résultent de l'alignement des chaines de PVA induit par le taux de cisaillement pendant le procédé d'extrusion.

Des mesures d'adsorption/désorption à l'azote ont été utilisées pour caractériser la porosité des fibres ainsi que leur rugosité à l'échelle mésoscopique. Les résultats correspondants sont donnés par les figures 3 et 4 annexées.

La figure 3 représente la quantité d'azote adsorbée (en cm$^3$/g) en fonction de la pression relative ($P/P_0$), les ronds pleins correspondant aux courbes de désorption et les carrés pleins aux courbes d'adsorption.

La figure 4 représente le rapport dV/dlog(D) (en cm$^3$/g.Å) en fonction du diamètre des pores (en nm). Dans le rapport dV/dlog(D), V étant le volume d'azote adsorbé aux interfaces et D représentant le diamètre des pores.

Ces résultats montrent que les fibres de $TiO_2$ obtenus par le procédé conforme à l'invention ont un profil d'adsorption représentatif d'un isotherme de type IV, et une distribution du diamètre poreux dans la gamme des mésopores (entre 2 et 37 nm environ). La présence de points d'adsorption à $P/P_0 < 0,05$ indique que les fibres sont également microporeuses.

Les surfaces spécifiques, calculées selon les méthodes B.E.T. et B.J.H., ainsi que le volume poreux total et les valeurs de rugosité de surface (Ds) sont présentés dans le tableau 1 ci-après :

**TABLEAU 1**

| Surface spécifique B.E.T. (m$^2$.g$^{-1}$) | Surface spécifique B.J.H (m$^2$.g$^{-1}$) | Volume poreux total (mL.g$^{-1}$) | Rugosité de surface (Ds) |
|---|---|---|---|
| 136 | 166 | 0,31 | 2,56 |

La distribution de la taille des pores, calculée selon l'équation de Barret-Joyner-Halenda (B.J.H.) à partir des courbes de désorption, indique une distribution de la taille des pores entre 6 et 18 nm.

Par ailleurs, la valeur de Ds obtenue (2,56) montre que le procédé de préparation conforme à la présente invention permet d'accéder à des fibres de $TiO_2$ présentant une rugosité de surface importante à l'échelle mésoscopique.

La structure des fibres à l'échelle microscopique a été étudiée par diffraction aux rayons X. Les résultats correspondant sont représentés sur la figure 5 annexée sur laquelle l'intensité (en unité arbitraires) est fonction de l'angle 2 $\theta$ (en degrés). Ces résultats indiquent que les fibres sont principalement composées de $TiO_2$ en phase anatase (85-90%), avec un peu de brookite (10-15 %). La quantité de brookite présente dans les fibres de $TiO_2$ obtenues selon le procédé conforme à l'invention est supérieure à celle présente dans les fibres obtenues selon le procédé de préparation par extrusion en rotation (Kinadjian N. *et al.,* précité). Les résultats de diffraction aux rayons X confirment par ailleurs que les lavages réalisés ont permis d'éliminer toute trace des sels utilisés pendant la fabrication ($Na_2SO_4$ et tetraborate de sodium).

**EXEMPLE 2 : Etude des propriétés photocatalytiques des fibres macroscopiques de $TiO_2$ obtenues selon le procédé de préparation conforme à l'invention**

Dans cet exemple, on a étudié les propriétés photocatalytiques des fibres macroscopiques de $TiO_2$ telles que préparées ci-dessus à l'exemple 1.

2.1. Principe du test

Dans cet exemple on a étudié les propriétés photocatalytiques des fibres macroscopiques de $TiO_2$ préparées ci-dessus à l'exemple 1 selon le procédé conforme à l'invention d'extrusion co-axiale (ci-après dénommées F-$TiO_2$-extr.CoAx), comparativement d'une part à celles d'un matériau de référence, connu pour ses excellentes propriétés photocatalytique et constitué de nanoparticules de $TiO_2$ Anatase, supportées par des fibres de quartz et vendu sous la dénomination commerciale Quartzel® PCO par la société Saint Gobain (ci-après dénommées F-$TiO_2$-Quartzel), et, d'autre part à celles de fibres macroscopiques de $TiO_2$ obtenues selon le procédé d'extrusion en rotation tel que décrit par Kinadjian N. *et al.* (précité), (ci-après dénommées F-$TiO_2$-Extr-ROT).

La réaction servant à l'étude des propriétés photocatalytiques des différents matériaux testés dans cet exemple est la minéralisation de l'acétone, selon l'équation suivante :

$$CH_3\text{-}CO\text{-}CH_3 + 3\,O_2 \xrightarrow{TiO_2,\ UV} 3\,CO_2 + 3\,H_2O$$

2.2. Dispositif expérimental

Les propriétés photocatalytiques des matériaux ont été étudiées sur le dispositif schématisé sur la figure 6 annexée comprenant notamment un photoréacteur cylindrique 1 intégré dans un circuit en polytetrafluoroéthylène (PTFE).

Ce dispositif représenté dans sa globalité sur la figure 6a) se compose d'un réservoir de gaz (air) thermorégulé de 17 litres 2 relié à une pompe de circulation 3 dont le débit est contrôlé par un débit-mètre 4. Afin de limiter l'échauffement du gaz, des colonnes thermorégulées 6,7 sont positionnées en amont et en aval de la pompe de circulation 3. Le réservoir de gaz comporte une entrée d'air 9 et une sortie d'air 10 et est équipé d'un manomètre 11 et d'une sonde 12 mesurant la température et l'hygrométrie afin d'enregistrer la température et l'humidité relative du gaz circulant dans le circuit pendant toute la durée de l'expérience. La thermorégulation du dispositif a été assurée par un bain d'eau 5. Le gaz a été automatiquement et périodiquement échantillonné à travers une pompe (débit 10 $L.min^{-1}$) à l'aide chromatographe en phase gazeuse 13 vendu sous la référence Varian 3800 GC avec un détecteur à ionisation de flamme pour l'analyse des composés organiques volatils (COVs) et équipé d'un détecteur catharomètre pour l'analyse du $CO_2$. Le photoréacteur cylindrique 1 est représenté en détail sur la figure 6b et est composé d'une colonne thermorégulée en pyrex 1a comprenant une entrée 1b d'eau et une sortie 1c d'eau et contenant un capillaire en Pyrex® 1d ayant un diamètre interne de 10 mm (connu sous l'anglicisme « *canister* ») renfermant les fibres à tester pour leurs propriétés photocatalytiques. Le débit du gaz dans le circuit était d'environ 0,7 $m.s^{-1}$ lorsque le débit-mètre 4 était réglé à 3,3 $L.min^{-1}$. Quatre tubes 8 fluorescents (Philips TLD8W) émettant à 366 nm sont fixés au dessus du photoréacteur 1, pour délivrer une irradiance de 3,2 $mW/cm^2$ en rayons UV-A à l'intérieur du réacteur.. L'irradiance réellement reçue par les fibres à tester placées dans le capillaire 1b du photoréacteur 1 était inférieure à 3.2 $mW/cm^2$ en raison de l'absorbance des parois en Pyrex ® de la colonne thermorégulée 1a et du capillaire 1b.

Les propriétés photocatalytiques des fibres de $TiO_2$ préparées selon l'exemple 1 ci-dessus et celles des fibres commerciales Quartzel® PCO ont été évaluées dans des conditions strictement comparatives, la même procédure étant suivie dans toutes les expériences.

Une fois que le matériau a testé a été inséré dans le photoréacteur 1 (5 et 40 mg de fibres à chaque expérience), de l'air synthétique a été injecté dans le circuit et l'humidité relative a été ajustée à 15 % par injection de la quantité d'eau nécessaire dans le circuit. Le débit de la pompe de circulation 3 a été réglé à 3,3 $L.min^{-1}$, correspondant à un débit de gaz dans le circuit de 0,7 $m.s^{-1}$, ce qui correspond aux conditions optimales pour réaliser la conversion photocatalytique de l'acétone. La température du gaz circulant étant de 22°C $\pm$ 2°C. Les fibres ont d'abord été irradiées pendant 20 heures dans ces conditions, sans acétone afin de procéder à leur activation et d'évaluer la possible évolution de la quantité de COVs ou de $CO_2$ adsorbée. Le chromatographe n'a enregistré aucun pic d'adsorption durant cette période d'activation. Les lampes 8 ont ensuite été éteintes.

45 ppmv (2 $\mu$l) d'acétone ont ensuite été injectés dans le réservoir de gaz 2. L'adsorption d'acétone par les fibres à tester a ensuite été suivie par chromatographie l'aide du chromatographe en phase gazeuse 13. Lorsque la concentration en acétone gazeux a été stabilisée, les lampes ont été allumées (t = 0). Les concentrations en acétone

et en $CO_2$ ont été déterminées et enregistrées toutes les 7 minutes. Les fuites possibles de $CO_2$ et d'acétone ont par ailleurs été déterminées en faisant fonctionner le dispositif sans irradiation (moins de 10 % de perte en 10 heures) et soustraites aux résultats obtenus en phase d'analyse des fibres à tester.

2.3. Résultats

Les résultats obtenus sont présentés dans le tableau 2 ci-après, l'efficacité photocatalytique des fibres étant déterminée en mesurant la cinétique de réaction de dégradation de l'acétone à l'ordre 1 et exprimée en $min^{-1}.g^{-1}$ :

**TABLEAU 2**

| Fibres testées | F-$TiO_2$-extr.CoAx | F-$TiO_2$-Quartzel (*) | F-$TiO_2$-Extr-ROT (*) |
|---|---|---|---|
| Diamètre (μm) | 40 | 9 | 130 |
| Topologie macroscopique de surface | « striations en tronc d'arbre » | Nanoparticules de $TiO_2$ déposées sur des fibres de quartz | Juxtaposition de pores |
| Efficacité photocatalytique | 0,12 $min^{-1}.g^{-1}$ | 0,15 $min^{-1}.g^{-1}$ | 0,037 $min^{-1}.g^{-1}$ |
| (*) Fibres non conformes à l'invention | | | |

Ces résultats montrent que les fibres macroscopiques de $TiO_2$ obtenues selon le procédé de préparation par extrusion co-axiale conforme à l'invention (F-$TiO_2$-extr.CoAx) présentent une efficacité moyenne qui est environ 3 fois plus importante que celle des fibres macroscopiques de $TiO_2$ obtenues selon le procédé de préparation par extrusion en rotation de l'art antérieur (F-$TiO_2$-Extr-ROT), cette efficacité étant du même ordre de grandeur que celles des fibres commerciales F-$TiO_2$-Quartzel, ce qui les rend compétitives d'un point de vue industriel et commercial.

Ainsi que cela est également indiqué dans le tableau 2 ci-dessus, les fibres macroscopiques de $TiO_2$ obtenues selon le procédé de préparation par extrusion co-axiale conforme à l'invention se distinguent essentiellement des fibres macroscopiques de $TiO_2$ obtenues selon le procédé de préparation par extrusion co-axiale décrit dans le document Kinadjian N. *et al.* (précité), par le fait qu'elles présentent un diamètre environ 3 fois moindre, de l'ordre de 40 μm environ (au lieu de 130 μm environ) et une topologie macroscopique en surface comportant des striations longitudinales parallèles à l'axe longitudinal des fibres et dite « en tronc d'arbre » (voir figure 2 annexée).

Il est donc possible de conclure que l'amélioration des propriétés catalytiques des fibres macroscopiques de $TiO_2$ obtenues selon le procédé conforme à l'invention résulte de la modification de ces caractéristiques (diamètre et topologie macroscopique de surface).

**EXEMPLE 3 : Dégradation photocatalytique du toluène**

Dans cet exemple, on a étudié les propriétés photocatalytiques des fibres macroscopiques de $TiO_2$ telles que préparées ci-dessus à l'exemple 1 vis-à-vis de la minéralisation du toluène. A titre comparatif, les fibres commerciales F-$TiO_2$-Quartzel ont également été testées.

3.1. Principe du test

La réaction utilisée dans cet exemple est la minéralisation du toluène, selon l'équation suivante :

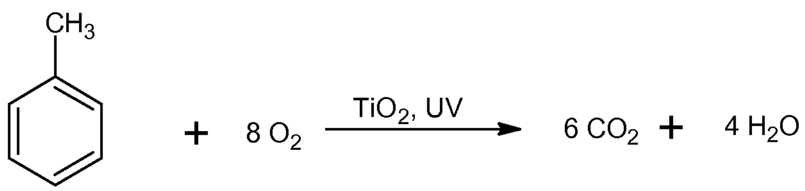


3.2. Dispositif expérimental

L'expérience a été réalisée sur le même dispositif que celui utilisé ci-dessus à l'exemple 2 et dans les mêmes conditions, aux différences près détaillées ci-après :

- les fibres de $TiO_2$ préparées selon l'exemple 1 ci-dessus (80 mg) et les fibres commerciales Quartzel® PCO (80 mg) ont été enchevêtrées sous la forme d'un tapis de 72 mm de diamètre et de 10 mm d'épaisseur. Ce sont ces tapis de fibres, respectivement dénommés F-$TiO_2$-extr.CoAx-Tapis et F-$TiO_2$-Quartzel-Tapis qui ont ensuite été placés dans le photoréacteur ;

- Photoréacteur cylindrique d'un diamètre de 80 mm environ et d'une hauteur d'environ 200 mm, équipé d'un couvercle en Téflon® et de deux raccords Swagelok ®. A l'intérieur de ce photoréacteur, un disque de verre poreux horizontal, c'est-à-dire placé de façon transversale à l'axe vertical du photoréacteur, supporte le tapis de fibres à tester ;

- Dispositif d'irradiation composé de 4 diodes électroluminescentes (ou LED pour « *Light Emitting Diodes»*) (H2A1-H365-E 350 mA Roithner Lasertechnik) avec un maximum à 350 nm, délivrant une irradiance variable entre 1 et 10 $mW/cm^2$ en rayons UV-A à l'intérieur du photoréacteur ;

- Humidité relative ajustée à 20% par injection de la quantité nécessaire d'eau dans le circuit ;

- Injection de 100 ppmv de toluène dans le réservoir de gaz 2 (soit 13 $\mu$l).

3.3. Résultats

Les résultats obtenus sont présentés dans le tableau 3 ci-après, l'efficacité photocatalytique des fibres étant déterminée en mesurant la cinétique de réaction de dégradation du toluène à l'ordre 1 et exprimée en $ppmv.min^{-1}$ :

**TABLEAU 3**

| **Fibres testées** | **F-$TiO_2$-extr.CoAx-Tapis** | **F-$TiO_2$-Quartzel-Tapis (*)** |
|---|---|---|
| Efficacité photocatalytique | 0,0011 $ppmv.min^{-1}$ | 0,0004 $ppmv.min^{-1}$ |
| (*) Fibres non conformes à l'invention | | |

Ces résultats montrent que la cinétique de dégradation du toluène est plus rapide avec le tapis de fibres de $TiO_2$ enchevêtrées conforme à l'invention qu'avec le tapis de fibres commerciales Quartzel® PCO enchevêtrées non conforme à l'invention. Par ailleurs, environ 30 % seulement de la quantité de toluène injectée a été minéralisée après 500 minutes d'irradiation avec le tapis de fibres commerciales Quartzel® PCO enchevêtrées ne faisant pas partie de l'invention alors qu'avec le tapis de fibres de $TiO_2$ enchevêtrées préparées selon l'exemple 1 et donc conforme à l'invention, ce pourcentage était de 47 %. Par ailleurs la conversion ultérieure du toluène a été quasiment nulle entre 500 et 1200 minutes avec le tapis de fibres commerciales Quartzel® PCO enchevêtrées non conforme à l'invention, alors qu'elle a atteint 94 % avec le tapis de fibres de $TiO_2$ enchevêtrées préparées selon l'exemple 1.

Par ailleurs, l'observation des fibres après la réaction photocatalytique (non représentée) a montré que les fibres commerciales Quartzel® PCO présentaient une coloration jaune et que des grumeaux noirs étaient présents entre les fibres enchevêtrées. Une purification intensive de 48 heures sous irradiation dans le réacteur sans polluant (HR 20%, air propre) a été nécessaire pour rendre au tapis de fibres sa couleur initiale et son activité. *A contrario,* le tapis de fibres conforme à l'invention ne présentait, à la fin de l'expérience de minéralisation du toluène, aucune coloration jaune et aucun grumeau noir et a conduit à la dégradation totale du toluène en 1500 min, sans aucun signe de désactivation (augmentation continue de la quantité de $CO_2$ dégagé).

**Revendications**

**1.** Procédé de préparation d'une fibre macroscopique de dioxyde de titane en continu comprenant les étapes suivantes :

i) la préparation d'une dispersion de nanoparticules de dioxyde de titane dans une solution d'au moins un polymère d'alcool vinylique solubilisé dans un solvant,
ii) l'extrusion continue et unidirectionnelle de la dispersion obtenue ci-dessus à l'étape précédente dans un bain de coagulation apte à provoquer la solidification dudit polymère, ladite extrusion étant réalisée au moyen d'une ou d'un ensemble d'aiguilles cylindriques d'injection ayant un diamètre compris entre 250 et 350 $\mu$m, pour former une pré-fibre en un matériau composite comprenant les nanoparticules de dioxyde de titane et le polymère d'alcool vinylique solidifié,
iii) l'extraction continue de la pré-fibre formée ci-dessus à l'étape ii) en dehors du bain de coagulation, ladite

extraction étant réalisée co-axialement par rapport à l'axe d'extrusion de la dispersion dans ledit bain de coagulation,
iv) le lavage en continu de la pré-fibre extraite du bain de coagulation,
v) le séchage en continu de la pré-fibre de l'étape précédente pour obtenir une fibre de matériau composite sec,
vi) l'élimination du polymère d'alcool vinylique par calcination de la pré-fibre de matériau composite sec de l'étape précédente, pour obtenir une fibre macroscopique de dioxyde de titane.

2. Procédé selon la revendication 1, **caractérisé en ce que** les nanoparticules de dioxyde de titane utilisées lors de l'étape i) sont des nanoparticules sphériques dont le diamètre moyen varie de 2 à 15 nm.

3. Procédé selon la revendication 1 ou 2, **caractérisé en ce que** la quantité de nanoparticules de dioxyde de titane au sein de la dispersion préparée à l'étape i) varie de 3 à 7 % en masse par rapport à la masse totale de la dispersion.

4. Procédé selon l'une quelconque des revendications précédentes, **caractérisé en ce que** le polymère d'alcool vinylique utilisé lors de l'étape i) est un homo- ou un copolymère d'alcool vinylique dont la masse moléculaire varie de 5000 à 300000 $g.mol^{-1}$, $g.mol^{-1}$, et présentant un degré d'hydrolyse supérieur à 95 %.

5. Procédé selon l'une quelconque des revendications précédentes, **caractérisé en ce que** la quantité de polymère d'alcool vinylique au sein de la dispersion préparée à l'étape i) varie de 2 à 11 % en masse par rapport à la masse totale de la dispersion.

6. Procédé selon l'une quelconque des revendications précédentes, **caractérisé en ce que** l'étape i) comprend les sous-étapes suivantes :

i1) la préparation d'une dispersion aqueuse de nanoparticules de dioxyde de titane,
i2) la préparation d'une dispersion aqueuse de particules solides d'un polymère d'alcool vinylique,
i3) le mélange des dispersions obtenues ci-dessus aux étapes i1) et i2), pour obtenir une dispersion de nanoparticules de dioxyde de titane dans une solution de polymère d'alcool vinylique.

7. Procédé selon l'une quelconque des revendications précédentes, **caractérisé en ce que** la dispersion de nanoparticules de dioxyde de titane préparée à l'étape i) renferme en outre des particules sphériques d'un matériau polymère choisies parmi des nanoparticules de polystyrène, de polyméthacrylate, de polyméthacrylate d'éthyle, de polybutadiène, et de polystyrène-divinylbenzène.

8. Procédé selon l'une quelconque des revendications précédentes, **caractérisé en ce que** le bain de coagulation est une solution aqueuse saturée de sulfate de sodium.

9. Procédé selon l'une quelconque des revendications précédentes, **caractérisé en ce que** la vitesse d'injection de la dispersion dans le bain de coagulation varie de 1 à 1,9 m/min.

10. Procédé selon l'une quelconque des revendications précédentes, **caractérisé en ce que** la durée de l'étape iv) de lavage varie de 1 à 3 minutes.

11. Procédé selon l'une quelconque des revendications précédentes, **caractérisé en ce que** l'étape de séchage des pré-fibres de matériau composite lors de l'étape v) est réalisée par exposition desdites pré-fibres à une température variant de 65 à 90°C pendant une durée de 1 à 3 minutes.

12. Procédé selon l'une quelconque des revendications précédentes, **caractérisé en ce qu'**il comprend en outre, entre l'étape v) de séchage et l'étape vi), une étape de mise en forme des pré-fibres, afin d'obtenir un assemblage de pré-fibres mises en forme.

13. Procédé selon l'une quelconque des revendications précédentes, **caractérisé en ce que** l'étape vi) est réalisée à une température variant de 350 à 500°C.

14. Procédé selon l'une quelconque des revendications précédentes, **caractérisé en ce qu'**il comprend en outre une étape de bobinage et d'étirage à chaud des pré-fibres de matériau composite, ladite étape d'étirage étant réalisée entre l'étape de séchage et l'étape de bobinage.

**15.** Procédé selon la revendication 14, **caractérisé en ce qu'**il est mis en oeuvre sur une ligne de fabrication comprenant, en alignement unidirectionnel et dans cet ordre, un poste d'injection de la dispersion de nanoparticules dans un bain de coagulation, un poste de lavage, un poste de séchage et un poste de bobinage comprenant une bobine reliée à un moyen permettant de faire tourner la bobine à vitesse constante, un ou plusieurs rouleaux intermédiaires pouvant être placés entre le poste de lavage et le poste de séchage afin de supporter et entrainer les fibres jusqu'au poste de bobinage, et un poste de calcination.

**16.** Fibre macroscopique de dioxyde de titane susceptible d'être obtenue par la mise en oeuvre du procédé tel que défini à l'une quelconque des revendications précédentes, **caractérisée en ce qu'**elle est constituée de 85 à 90 % de dioxyde de titane sous forme cristalline anatase et de 10 à 15 % de brookite, et **en ce qu'**elle présente :

- deux dimensions moyennes orthogonales à leur axe longitudinal, la première dimension moyenne variant de 30 à 60 μm et la deuxième dimension moyenne variant de 10 à 40 μm environ ;
- une topologie macroscopique de surface composée d'une pluralité de striations ayant un axe longitudinal parallèle à l'axe principal desdites fibres ; et
- une structure comportant des micropores et des mésopores et dont les dimensions moyennes, en ce qui concerne les mésopores, varient de 2 à 40 nm.

**17.** Fibre selon la revendication 16, **caractérisée en ce qu'**elle présente une surface spécifique variant de 100 à 150 $cm^2/g$.

**18.** Utilisation des fibres macroscopiques de dioxyde de titane telles que définies à l'une quelconque des revendications 16 ou 17, à titre de photocatalyseur.

**19.** Utilisation selon la revendication 18, pour catalyser la dégradation de composés organiques volatiles en milieu gazeux sous l'influence d'une irradiation UV.

**20.** Procédé de décontamination d'un milieu gazeux susceptible de contenir un ou plusieurs composés organiques volatils, ledit procédé étant **caractérisé en ce que** la décontamination est réalisée par mise en contact dudit milieu gazeux avec des fibres macroscopiques de dioxyde titane telles que définies à l'une quelconque des revendications 16 et 17, sous irradiation lumineuse à une longueur d'onde centrée vers 365 nm.

**Patentansprüche**

**1.** Verfahren zur kontinuierlichen Herstellung einer makroskopischen Titandioxid-Faser, umfassend die folgenden Schritte:

i) Vorbereiten einer Dispersion aus Titandioxid-Nanopartikeln in einer Lösung mindestens eines in einem Lösungsmittel gelösten Vinylalkoholpolymers,
ii) kontinuierliches und eindirektionales Extrudieren der in obigem vorangehendem Schritt erhaltenen Dispersion in einem Koagulationsbad, das imstande ist, die Verfestigung des Polymers auszulösen, wobei die Extrusion mit Hilfe einer oder einer Gruppe von zylindrischen Spritznadeln mit einem Durchmesser zwischen 250 und 350 μm durchgeführt wird, um eine Vorfaser aus einem Verbundmaterial zu bilden, umfassend die Titandioxid-Nanopartikeln und das verfestigte Vinylalkoholpolymer,
iii) kontinuierliches Extrahieren der in obigem Schritt ii) gebildeten Vorfaser außerhalb des Koagulationsbads, wobei die Extraktion in Bezug zur Extrusionsachse der Dispersion in dem Koagulationsbad koaxial durchgeführt wird,
iv) kontinuierliches Waschen der aus dem Koagulationsbad extrahierten Vorfaser,
v) kontinuierliches Trocknen der Vorfaser aus vorangehendem Schritt, um eine Faser aus trockenem Verbundmaterial zu erhalten,
vi) Entfernen des Vinylalkoholpolymers durch Kalzinieren der Vorfaser aus trockenem Verbundmaterial aus vorangehendem Schritt, um eine makroskopische Titandioxid-Faser zu erhalten.

**2.** Verfahren nach Anspruch 1, **dadurch gekennzeichnet, dass** die in Schritt i) verwendeten Titandioxid-Nanopartikel sphärische Nanopartikel mit einem mittleren Durchmesser von 2 bis 15 nm sind.

**3.** Verfahren nach Anspruch 1 oder 2, **dadurch gekennzeichnet, dass** die Menge von Titandioxid-Nanopartikeln

innerhalb der in Schritt i) hergestellten Dispersion von 3 bis 7 Ma% in Bezug zur Gesamtmasse der Dispersion schwankt.

4. Verfahren nach einem der vorangehenden Ansprüche, **dadurch gekennzeichnet, dass** das in Schritt i) verwendete Vinylalkoholpolymer ein Homo- oder ein Co-Vinylalkoholpolymer ist, dessen molekulare Masse von 5000 bis 300000 $g.mol^{-1}$, $g.mol^{-1}$ schwankt und einen Hydrolysegrad über 95 % aufweist.

5. Verfahren nach einem der vorangehenden Ansprüche, **dadurch gekennzeichnet, dass** die Menge von Vinylalkoholpolymer innerhalb der in Schritt hergestellten Dispersion von 2 bis 11 Ma% in Bezug zur Gesamtmasse der Dispersion schwankt.

6. Verfahren nach einem der vorangehenden Ansprüche, **dadurch gekennzeichnet, dass** Schritt i) die folgenden Unterschritte umfasst:

   i1) Herstellen einer wässrigen Dispersion von Titandioxid-Nanopartikeln,
   i2) Herstellen einer wässrigen Dispersion von festen Partikeln eines Vinylalkoholpolymers,
   i3) Mischen der in den obigen Schritten i1) und i2) erhaltenen Dispersionen, um eine Dispersion von Titandioxid-Nanopartikeln in einer Vinylalkoholpolymerlösung zu erhalten.

7. Verfahren nach einem der vorangehenden Ansprüche, **dadurch gekennzeichnet, dass** die in Schritt i) hergestellte Dispersion von Titandioxid-Nanopartikeln ferner sphärische Partikel eines Polymermaterials einschließt, die aus den Polystyrol-, Polymethacrylat-, Ethylpolymethacrylat-, Polybutadien- und Polystyroldivinylbenzol-Nanopartikeln ausgewählt sind.

8. Verfahren nach einem der vorangehenden Ansprüche, **dadurch gekennzeichnet, dass** das Koagulationsbad eine mit Natriumsulfat gesättigte wässrige Lösung ist.

9. Verfahren nach einem der vorangehenden Ansprüche, **dadurch gekennzeichnet, dass** die Einspritzgeschwindigkeit der Dispersion in das Koagulationsbad von 1 bis 1,9 m/min schwankt.

10. Verfahren nach einem der vorangehenden Ansprüche, **dadurch gekennzeichnet, dass** die Dauer des Waschschritts iv) von 1 bis 3 Minuten schwankt.

11. Verfahren nach einem der vorangehenden Ansprüche, **dadurch gekennzeichnet, dass** der Trocknungsschritt der Verbundmaterial-Vorfasern während Schritt v) durch Exposition der Vorfasern einer Temperatur durchgeführt wird, die von 65 bis 90 °C schwankt, während einer Dauer von 1 bis 3 Minuten.

12. Verfahren nach einem der vorangehenden Ansprüche, **dadurch gekennzeichnet, dass** es ferner zwischen dem Trocknungsschritt v) und dem Schritt vi) einen Formungsschritt der Vorfasern umfasst, um eine Verbindung der geformten Vorfasern zu erhalten.

13. Verfahren nach einem der vorangehenden Ansprüche, **dadurch gekennzeichnet, dass** der Schritt vi) bei einer Temperatur von 350 bis 500 °C durchgeführt wird.

14. Verfahren nach einem der vorangehenden Ansprüche, **dadurch gekennzeichnet, dass** es ferner einen Wickel- und Warmziehschritt der Verbundmaterial-Vorfasern umfasst, wobei der Ziehschritt zwischen dem Trocknungsschritt und dem Wickelschritt durchgeführt wird.

15. Verfahren nach Anspruch 14, **dadurch gekennzeichnet, dass** es auf einer Fertigungslinie durchgeführt wird, die eindirektional aufgereiht und in dieser Reihenfolge einen Einspritzposten der Nanopartikeldispersion in ein Koagulationsbad, einen Waschposten, einen Trocknungsposten und einen Wickelposten, der eine Spule umfasst, die mit einem Mittel verbunden ist, das erlaubt, die Spule in konstanter Geschwindigkeit zu drehen, wobei eine oder mehrere Vermittlungswalzen zwischen dem Waschposten und dem Trocknungsposten platzierbar sind, um die Fasern zu stützen und bis zum Wickelposten zu befördern, und einen Kalzinierungsposten umfasst.

16. Makroskopische Titandioxid-Faser, die durch Umsetzung des Verfahrens nach einem der vorangehenden Ansprüche herstellbar ist, **dadurch gekennzeichnet, dass** sie von 85 bis 90 % Titandioxid in kristalliner Anatas-Form und von 10 bis 15 % Brookit gebildet ist und dass sie aufweist:

- zwei orthogonale mittlere Dimensionen in ihrer Längsachse, wobei die erste mittlere Dimension von zirka 30 bis 60 μm schwankt und die zweite mittlere Dimension von zirka 10 bis 40 μm schwankt,
- eine makroskopische Oberflächentopologie, zusammengesetzt aus einer Vielzahl von Riffeln mit einer Längsachse parallel zur Hauptachse der Fasern, und
- eine Struktur, aufweisend Mikroporen und Mesoporen und deren mittlere Dimensionen bezüglich der Mesoporen von 2 bis 40 nm schwanken.

**17.** Faser nach Anspruch 16, **dadurch gekennzeichnet, dass** sie eine spezifische Oberfläche aufweist, die von 100 bis 150 $cm^2/g$ variiert.

**18.** Verwendung makroskopischer Titandioxidfasern nach einem der Ansprüche 16 oder 17 als Photokatalysator.

**19.** Verwendung nach Anspruch 18 zum Katalysieren des Zerfalls flüchtiger organischer Verbindungen in gasförmigem Medium unter dem Einfluss einer UV-Bestrahlung.

**20.** Dekontaminierungsverfahren eines gasförmigen Mediums, das eine oder mehrere flüchtige organische Verbindungen enthalten kann, wobei das Verfahren **dadurch gekennzeichnet ist, dass** die Dekontaminierung durch Inkontaktversetzen des gasförmigen Mediums mit makroskopischen Titandioxidfasern nach eine der Ansprüche 16 und 17 unter Lichtbestrahlung in einer auf zirka 365 nm zentrierten Wellenlänge durchgeführt wird.

## Claims

**1.** A process for preparing a titanium dioxide macroscopic fiber continuously comprising the following steps:

i) the preparation of a dispersion of titanium dioxide nanoparticles in a solution of at least one vinyl alcohol polymer dissolved in a solvent,
ii) the continuous and unidirectional extrusion of the dispersion obtained above in the preceding step in a coagulation bath suitable for giving rise to the solidification of said polymer, said extrusion being carried out by means of a, or a set of, cylindrical injection needle(s) having a diameter between 250 and 350 μm, in order to form a pre-fiber made of a composite material comprising the titanium dioxide nanoparticles and the solidified vinyl alcohol polymer,
iii) the continuous extraction of the pre-fiber formed above in step ii) out of the coagulation bath, said extraction being carried out coaxially relative to the axis of extrusion of the dispersion in said coagulation bath,
iv) the continuous washing of the pre-fiber extracted from the coagulation bath,
v) the continuous drying of the pre-fiber from the preceding step in order to obtain a dry composite material fiber,
vi) the elimination of the vinyl alcohol polymer by calcination of the dry composite material pre-fiber from the preceding step, in order to obtain a titanium dioxide macroscopic fiber.

**2.** The process as claimed in claim 1, **characterized in that** the titanium dioxide nanoparticles used during step i) are spherical nanoparticles, the mean diameter of which varies from 2 to 15 nm.

**3.** The process as claimed in claim 1 or 2, **characterized in that** the amount of titanium dioxide nanoparticles within the dispersion prepared in step i) varies from 3%to 7%by weight relative to the total weight of the dispersion.

**4.** The process as claimed in any one of the preceding claims, **characterized in that** the vinyl alcohol polymer used during step i) is a vinyl alcohol homopolymer or copolymer, the molecular weight of which varies from 5000 to 300 000 $g.mol^{-1}$, $g.mol^{-1}$, and has a degree of hydrolysis of greater than 95%

**5.** The process as claimed in any one of the preceding claims, **characterized in that** the amount of vinyl alcohol polymer within the dispersion prepared in step varies from 2%to 11%by weight relative to the total weight of the dispersion.

**6.** The process as claimed in any one of the preceding claims, **characterized in that** step i) comprises the following substeps:

i1) the preparation of an aqueous dispersion of titanium dioxide nanopart i cl es,
i2) the preparation of an aqueous dispersion of solid particles of a vinyl alcohol polymer,

i3) the mixing of the dispersions obtained above in steps i1) and i2), in order to obtain a dispersion of titanium dioxide nanoparticles in a vinyl alcohol polymer solution.

**7.** The process as claimed in any one of the preceding claims, **characterized in that** the dispersion of titanium dioxide nanoparticles prepared in step i) also contains spherical particles of a polymer material selected from nanoparticles of polystyrene, pol ymet hacryl at e, polyethyl methacrylate, polybutadiene and poly(styrene-divinylbenzene).

**8.** The process as claimed in any one of the preceding claims, **characterized in that** the coagulation bath is a saturated aqueous solution of sodium sulfate.

**9.** The process as claimed in any one of the preceding claims, **characterized in that** the injection rate of the dispersion into the coagulation bath varies from 1 to 1.9 m/ min.

**10.** The process as claimed in any one of the preceding claims, **characterized in that** the duration of the washing step iv) varies from 1 to 3 minutes.

**11.** The process as claimed in any one of the preceding claims, **characterized in that** the step of drying the composite material pre-fibers during step v) is carried out by exposing said pre-fibers to a temperature varying from 65°C to 90°C for a duration of 1 to 3 minutes.

**12.** The process as claimed in any one of the preceding claims, **characterized in that** it also comprises, between the drying step v) and step vi), a step of shaping the pre-fibers, in order to obtain an assembly of shaped pre-fibers.

**13.** The process as claimed in any one of the preceding claims, **characterized in that** step vi) is carried out at a temperature varying from 350°C to 500° C.

**14.** The process as claimed in any one of the preceding claims, **characterized in that** it also comprises a step of winding and of hot drawing the composite material pre-fibers, said drawing step being carried out between the drying st ep and the wi ndi ng step.

**15.** The process as claimed in claim 14, **characterized in that** it is carried out on a production line comprising, in unidirectional alignment and in this order, a station for injecting the dispersion of nanoparticles into a coagulation bath, a washing station, a drying station and a winding station comprising a reel connected to a means that makes it possible to rotate the reel at constant speed, one or more intermediate rolls being able to be placed between the washing station and the drying station in order to support and convey the fibers to the winding station, and a calcining station.

**16.** A titanium dioxide macroscopic fiber capable of being obtained by the implementation of the process as defined in any one of the preceding claims, **characterized in that** it consists of 85%to 90%of titanium dioxide in crystalline anatase form and of 10%to 15%of brookite, and **in that** it has:

- two mean dimensions orthogonal to their longitudinal axis, the first mean di mensi on varying from 30 to 60 μm and the second mean di mensi on varying from 10 to 40 μm approximately;
- a macroscopic surface topology composed of a plurality of striations having a longitudinal axis parallel to the main axis of said fibers; and
- a structure comprising micropores and mesopores and the mean dimensions of which, as regards the mesopores, vary from 2 to 40 nm.

**17.** The fiber as claimed in claim 16, **characterized in that** it has a specific surface area varying from 100 to 150 $cm^2/g$.

**18.** The use of the titanium dioxide macroscopic fibers as defined in either one of claims 16 and 17, as photocatalyst.

**19.** The use as claimed in claim 18, for catalyzing the degradation of volatile organic compounds in a gaseous medium under the influence of UV irradiation.

**20.** A process for decontaminating a gaseous medium capable of containing one or more volatile organic compounds, said process being **characterized in that** the decontamination is carried out by bringing said gaseous medium into contact with titanium dioxide macroscopic fibers as defined in either one of claims 16 and 17, under light irradiation

at a wavelength centered around 365 nm.

FIGURE 1

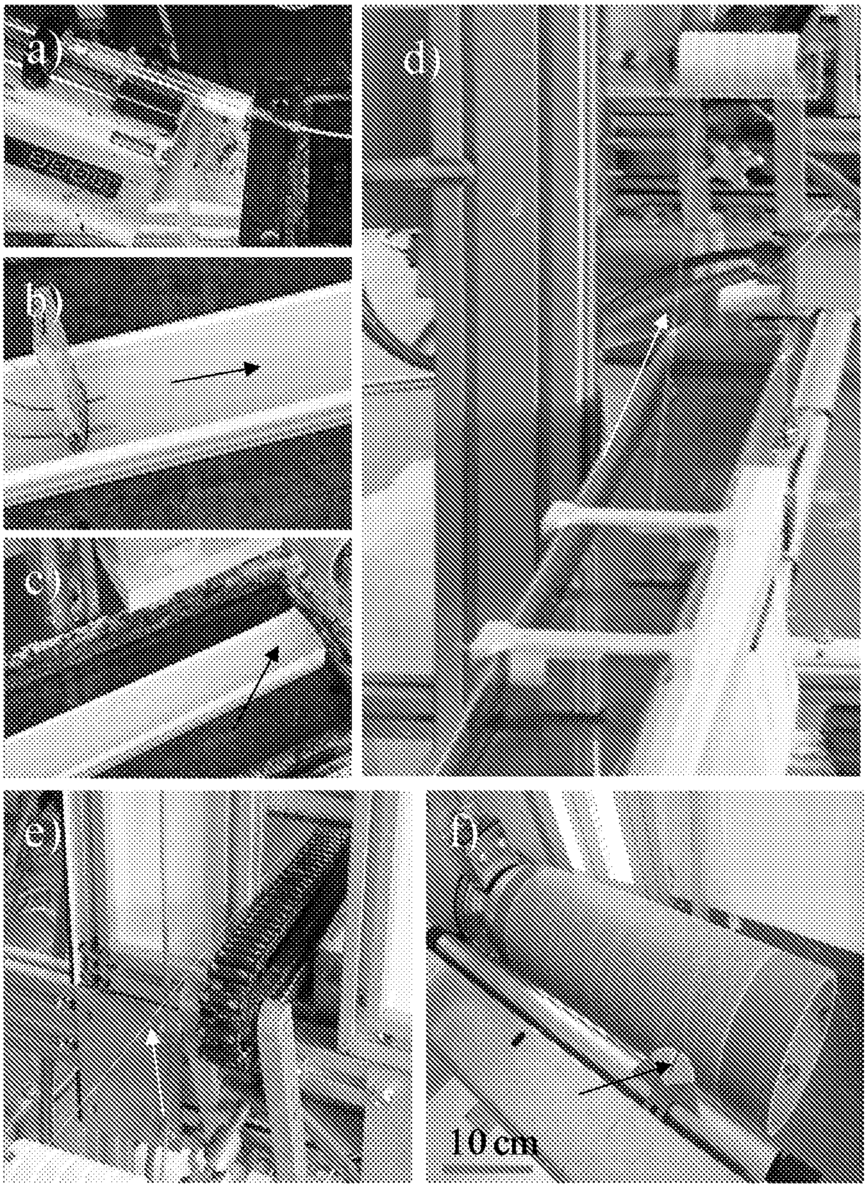

FIGURE 2

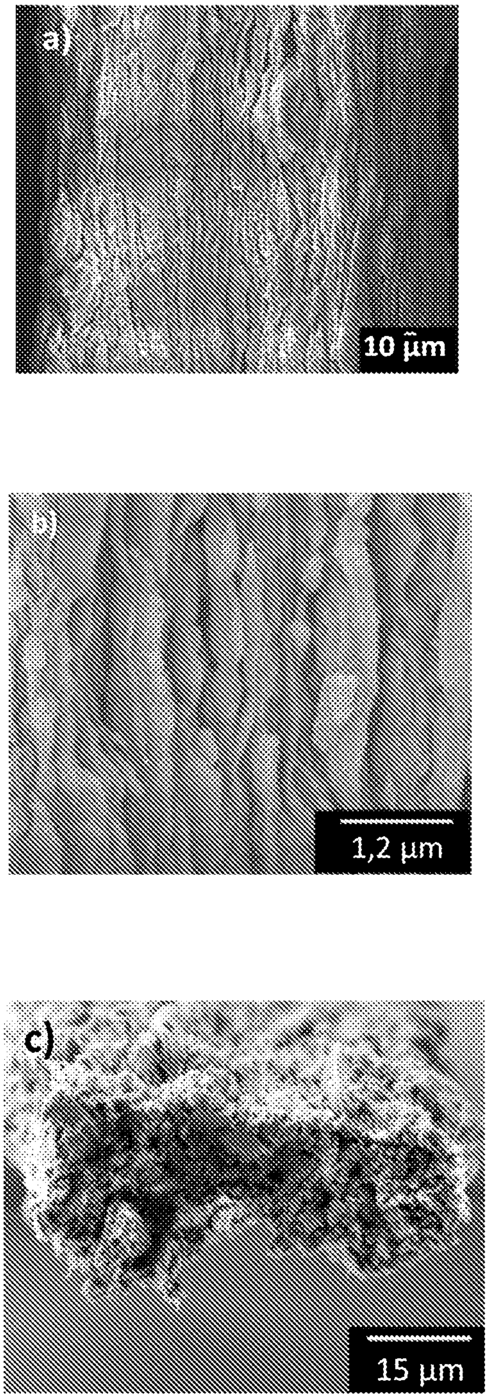

FIGURE 3

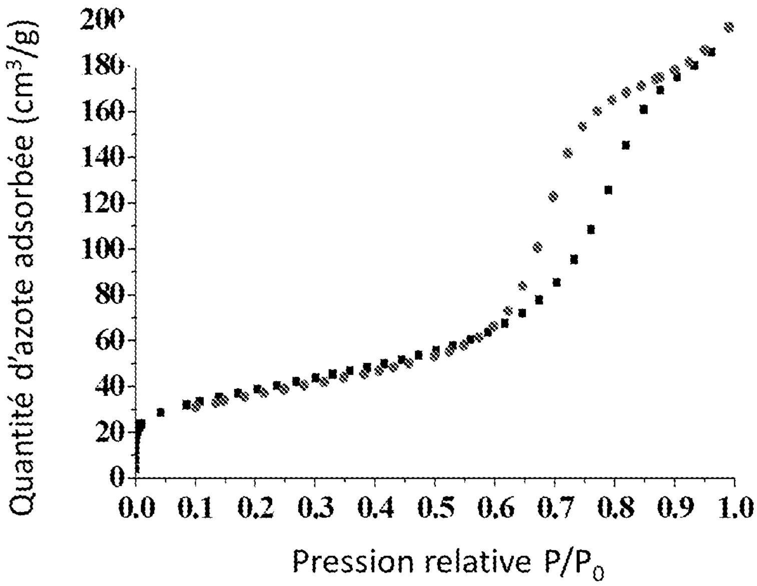


FIGURE 4

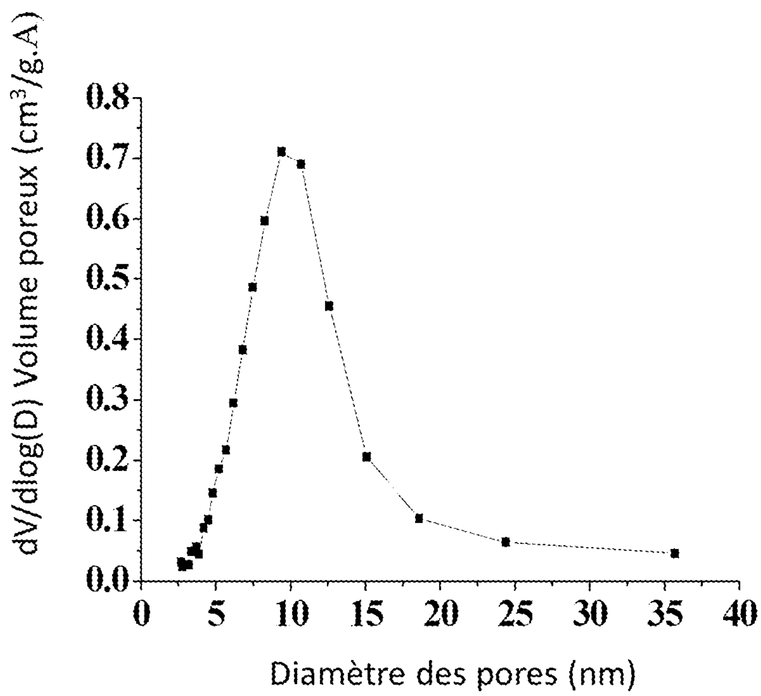

FIGURE 5

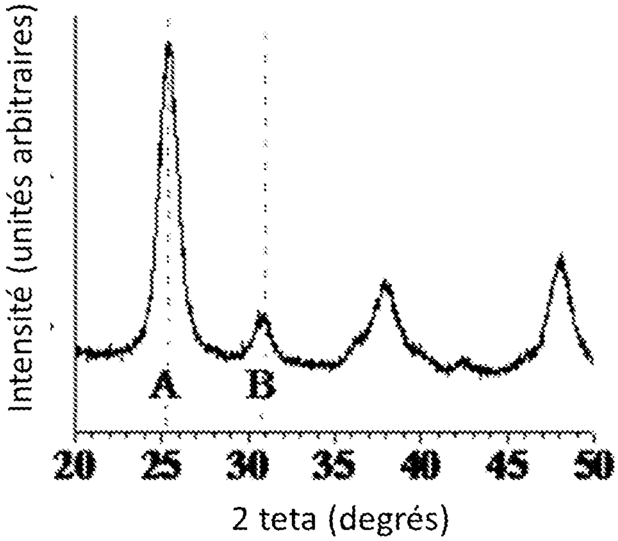


FIGURE 6

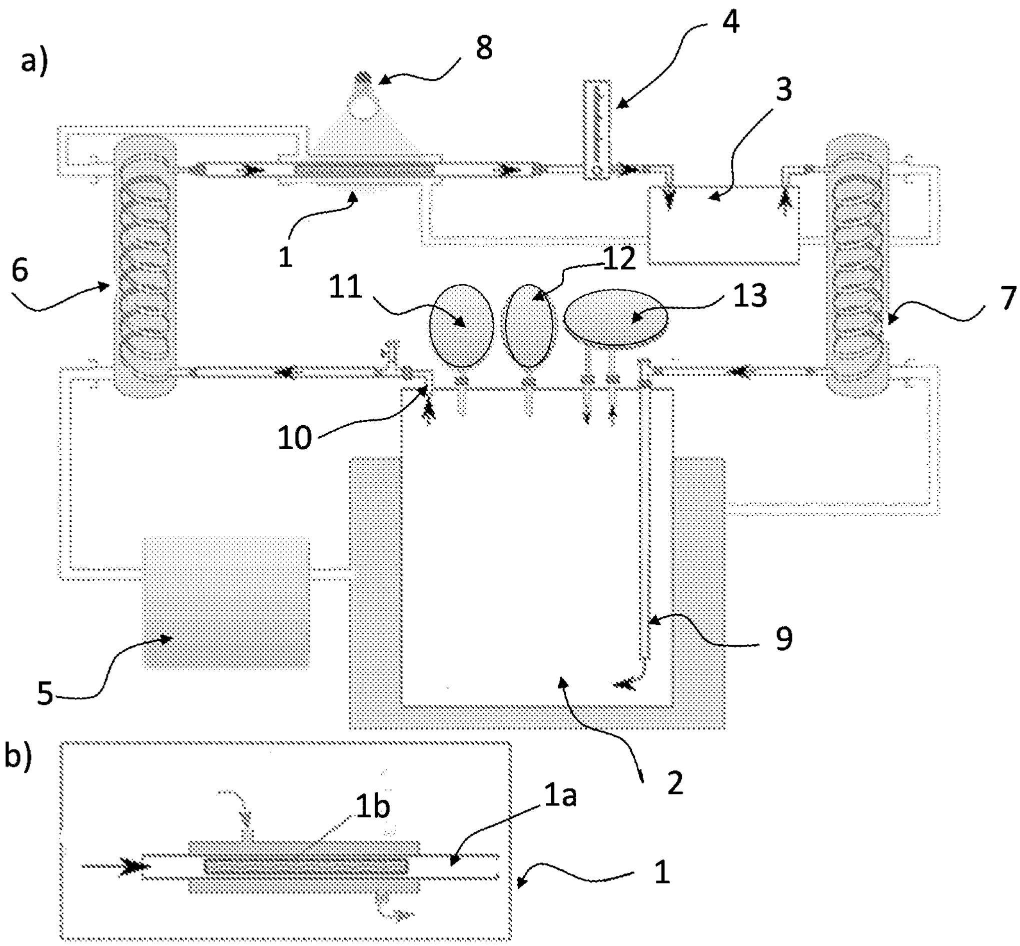

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0950731 A
- EP 1614763 A


### Littérature non-brevet citée dans la description


- **CARUSO, R. A. et al.** Titanium Dioxide Tubes from Sol-Gel Coating of Electrospun Polymer Fibers. *Adv. Mater.,* 2001, vol. 13, 1577-1579
- **KINADJIAN N. et al.** *Eur. J. Inorg. Chem.,* 2012, 5350-5359
- **AVNIR, D. ; JARONIEC, M.** An Isotherm Equation for Adsorption on Fractal Surfaces of Heterogeneous Porous Materials. *Langmuir,* 1989, vol. 5, 1431-1433